# EUROPEAN PATENT SPECIFICATION

(11) **EP 3 537 503 B1**
(45) Date of publication and mention of the grant of the patent: **04.05.2022**
(21) Application number: 19160936.1
(22) Date of filing: 06.03.2019
(51) Int. Cl.: H01M 50/403, H01M 50/411, H01M 50/446, H01M 50/449, H01M 10/052

(54) **SEPARATOR, METHOD OF PREPARING THE SAME, AND LITHIUM BATTERY INCLUDING THE SAME**
SEPARATOR, HERSTELLUNGSMETHODE DAFÜR UND LITHIUMBATTERIE DIESEN ENTHALTEND
SÉPARATEUR, SON PROCÉDÉ DE FABRICATION ET BATTERIE AU LITHIUM LE COMPRENANT

(30) Priority: 06.03.2018 KR 20180026533
(43) Date of publication of application: 11.09.2019
(73) Proprietor: Samsung SDI Co., Ltd., Gyeonggi-do 17084 (KR)
(72) Inventor: Kim, Gain, 17084 Yongin-si, Gyeonggi-do (KR); Kim, Yongkyoung, 17084 Yongin-si, Gyeonggi-do (KR); Lee, Jungyoon, 17084 Yongin-si, Gyeonggi-do (KR)
(74) Representative: Gulde & Partner

(56) References cited:
- US-A1- 2015 004 464
- US-A1- 2016 072 111
- US-A1- 2016 141 576
- DATABASE WPI Week 201805 Thomson Scientific, London, GB; AN 2018-01168R XP002790440, & WO 2018/004277 A1 (SAMSUNG SDI CO LTD) 4 January 2018 (2018-01-04)
- Nicolas Fedelich: "Application Handbook Thermal Analysis of Polymers Selected Applications Thermal Analysis", , 1 January 2013 (2013-01-01), XP055608279, Retrieved from the Internet: URL:https://www.mt.com/dam/LabDiv/guides-g len/ta-polymer/TA_Polymers_Selected_Apps_E N.pdf [retrieved on 2019-07-24]

## Description

One or more embodiments relate to a separator, a method of preparing the separator, and a lithium battery including the separator.

### Description of the Related Art

In accordance with trends towards small-sized, high-performance devices, it is becoming important to manufacture a smaller, more lightweight lithium battery. For applications in the field of electric vehicles, the discharge capacity, energy density, and cycle characteristics of lithium batteries are becoming more important. To satisfy these requirements, there is a need for a lithium battery having a high discharge capacity per unit volume, high energy density, and good lifespan characteristics.

To prevent a short circuit in a lithium battery, a separator may be arranged between a positive electrode and a negative electrode of the lithium battery. An electrode assembly, which includes the positive electrode, the negative electrode, and the separator between the positive electrode and the negative electrode, may be wound in the form of a jelly roll and then roll-pressed to improve adhesion between the separator and the positive electrode/negative electrode in the electrode assembly.

An olefin polymer is mostly used as a separator of a lithium battery. An olefin polymer has good flexibility, but leads to insufficient impregnation of liquid electrolyte due to its hydrophobic characteristics, and a short circuit of a battery due to drastic thermal shrinkage at high temperatures of 100°C or greater.

To solve these problems, there has been suggested a separator manufactured by coating ceramic on a surface of a porous olefin polymer substrate to improve strength and heat resistance of the separator. However, this ceramic-coated separator may have poor adhesion to the negative electrode/positive electrode and tends to be deformed due to a serious volume change of the battery during charging and discharging.

To improve adhesion between the ceramic-coated separator and the positive electrode/negative electrode, a separator further including a binder on the ceramic has been suggested. However, such a separator including a binder on the ceramic may have increased internal resistance due to a reduced porosity, and an increased thickness, leading to swelling of the binder in liquid electrolyte and more likely deterioration of the lithium battery.

When ceramic is used as a coating material, it is necessary to use microparticles to thin the coating thickness. However, an increased moisture content due to the specific surface area of the microparticles may lead to deterioration of cell lifetime.

US 2016/141576 A1, US 2015/004464 A1, US 2016/072111 A1 disclose exemplary embodiments of a separator for rechargeable lithium batteries including organic materials.

Therefore, there is a need for a separator capable of overcoming the drawbacks of the related art and having improved adhesion to electrodes even with a thin thickness and improved insulation properties and air permeability.

### SUMMARY

One or more embodiments include a separator having improved adhesion to electrodes and improved insulation properties and air permeability.

One or more embodiments include a method of preparing the separator.

One or more embodiments include a lithium battery including the separator.

Additional aspects will be set forth in part in the description which follows and, in part, will be apparent from the description, or may be learned by practice of the presented embodiments.

According to one aspect of the invention, there is provided a separator as defined in claim 1.

According to another first aspect of the invention, there is provided a method of preparing the separator as defined in claim 11.

According to another aspect of the present disclosure, a lithium battery includes: a positive electrode; a negative electrode; and the above-described separator interposed between the positive electrode and the negative electrode.

### BRIEF DESCRIPTION OF THE DRAWINGS

These and/or other aspects will become apparent and more readily appreciated from the following description of the embodiments, taken in conjunction with the accompanying drawings in which:
FIG. 1 is a schematic view of a lithium battery according to an embodiment;
FIG. 2 is a schematic view of a coating layer of a separator according to an embodiment.
FIG. 3 is a scanning electron microscope (SEM) image of a surface of a separator according to an embodiment;
FIG. 4 is a SEM image of a cross-section of a separator according to an embodiment;
FIG. 5 is a graph illustrating the particle diameter distribution of second organic particles used in Preparation Example 5 and an inorganic filler used in Comparative Preparation Example 1; and
FIG. 6 is a graph illustrating results of charge-discharge cycles of lithium batteries according to Examples 1 to 3 and Comparative Example 4.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of" when preceding a list of elements, modify the entire list of elements and do not modify the individual elements of the list.

Hereinafter, embodiments of a separator, a method of preparing the separator, and a lithium battery including the separator will be described in greater detail. These embodiments are only for illustrative purposes and not intended to limit the scope of the embodiments of the disclosure, which is defined by the claims.

### Separator

According to an aspect of the disclosure, there is provide a separator including a substrate and a coating layer on at least one surface of the substrate, wherein the coating layer includes first organic particles and second organic particles, an average particle diameter of the first organic particles is larger than an average particle diameter of the second organic particles, the first organic particles protrude a height of about 0.1 µm to about 0.5 µm from a dented portion of a surface of the coating layer and are distributed on a surface area of the coating layer corresponding to 5% or greater to less 30% of a total surface area of the coating layer.

The first organic particles used in the coating layer are made of an organic material, which supports adhesions of the separator to the electrode(s). The second organic particles used in the coating layer act as a filler material in the coating layer. Due to the inclusion of the first organic particles with an adhesive function and the second organic particles with a filler function, the separator according to one or more embodiments may provide an increased adhesive strength between the separator and electrodes, without an adhesive layer, and improved insulation characteristics and air permeability.

Particle size analysis in the claimed size range is performed on a routine basis using the dynamic light scattering (DLS) method, for example specified in ISO 22412:2017. For particle size distributions the median is called the D50. The D50 is the size in microns that splits the distribution with half above and half below this diameter.

In the separator according to one or more embodiments, the substrate may be a porous substrate. The porous substrate may be a porous membrane including polyolefin. Polyolefin may have a good short-circuit prevention effect and may improve battery safety with a shutdown effect. For example, the porous substrate may be a membrane including a resin, for example, a polyolefin such as polyethylene, polypropylene, polybutene or polyvinyl chloride, a mixture thereof, or a copolymer thereof. However, embodiments are not limited thereto. The porous substrate may be any porous membrane available in the art. For example, the porous substrate may be a porous membrane formed of a polyolefin resin; a porous membrane woven from polyolefin fibers; a nonwoven fabric including polyolefin; or an aggregate of insulating material particles. For example, the porous membrane including polyolefin may ensure a binder solution good coating properties to form the coating layer on the substrate, and may thin a thickness of the separator, resulting in an increased proportion of the active material in the battery and an increased capacity per unit volume.

For example, polyolefin used as a material of the porous substrate may be a homopolymer such as polyethylene or polypropylene, a copolymer thereof, or a mixture thereof. The polyethylene may be a low-density polyethyelene, a medium-density polyethyelene, or a high-density polyethylene. The high-density polyethylene may be used in view of mechanical strength. To provide flexibility, a mixture of at least two of polyethylenes may be used. A polymerization catalyst used in preparation of polyethylene is not specifically limited, and may be, for example, a Ziegler-Natta catalyst, a Phillips catalyst or a metallocene catalyst. To ensure both mechanical strength and high permeability, the polyethylene may have a weight average molecular weight of about 100,000 to about 12,000,000, and in some embodiments, about 200,000 to about 3,000,000. The polypropylene may be a homopolymer, a random polymer, or a block copolymer, which may be used alone or in combination of at least two. The polymerization catalyst is not specifically limited, and for example, may be a Ziegler-Natta catalyst or a metallocene catalyst. The polyethylene may have any stereoregularity, not specifically limited, for example, in isotactic, syndiotactic, or atactic form. Within the scope not to adversely affect advantages of the disclosure, other polyolefins, except for polyethylene and polypropylene , or an anti-oxidant may be added to the polyolefin.

For example, the porous substrate may be a multilayer including at least two layers and polyolefin such as polyethylene, polypropylene, or the like. For example, the porous substrate may include mixed multiple layers, for example, like a 2-layer separator including polyethylene/polypropylene layers, a 3-layer separator including polyethylene/polypropylene/polyethylene layers, or a 3-layer separator including polypropylene/polyethylene/polypropylene layers. However, embodiments are not limited thereto. For example, any material or any structure used for the porous substrate in the art may be used.

For example, the porous substrate may include a diene polymer prepared by polymerizing a monomer composition including a diene monomer. The diene monomer may be a conjugated diene monomer or a non-conjugated diene monomer. For example, the diene monomer may include at least one selected from the group consisting of 1,3-butadiene, isoprene, 2-chloro-1,3-butadiene, 2,3-dimethyl-1,3-butadiene, 1,3-2-ethyl-1,3-butadiene, pentadiene, chloroprene, vinylpyridine, vinylnorbornene, dicyclopentadiene, and 1,4-hexadiene. However, embodiments are not limited thereto. Any diene monomers available in the art may be used.

In the separator according to one or more embodiments, the porous substrate may have a thickness of about 1 µm to about 100 µm. For example, the porous substrate may have a thickness of about 1 µm to about 30 µm, and in some embodiments, about 5 µm to about 20 µm, and in some other embodiments, about 5 µm to about 15 µm, and in still other embodiments, about 5 µm to about 10 µm. When the thickness of the porous substrate is less than 1 µm, it may be difficult to maintain the mechanical properties of the separator. When the porous substrate of the separator has a thickness greater than 100 µm, the lithium battery may have increased internal resistance and thus a limitation in implementing a battery capacity.

In the separator according to one or more embodiments, the porous substrate may have a porosity of about 5% to about 95%. When the porous substrate has a porosity of less than 5%, the lithium battery may have increased internal resistance. When the porous substrate has a porosity greater than 95%, it may be difficult to maintain the mechanical properties of the porous substrate.

In the separator according to one or more embodiments, the porous substrate may have a pore size of about 0.01 µm to about 10 µm. For example, the porous substrate of the separator may have a pore size of about 0.01 µm to about 5 µm, and in some embodiments, about 0.01 µm to about 1 µm. When the pore size of the porous substrate is less than 0.01 µm, the lithium battery may have increased internal resistance. When the pore size of the porous substrate exceeds 10 µm, it may be difficult to maintain the mechanical characteristics of the porous substrate, causing problems such as precipitation of lithium and a voltage drop.

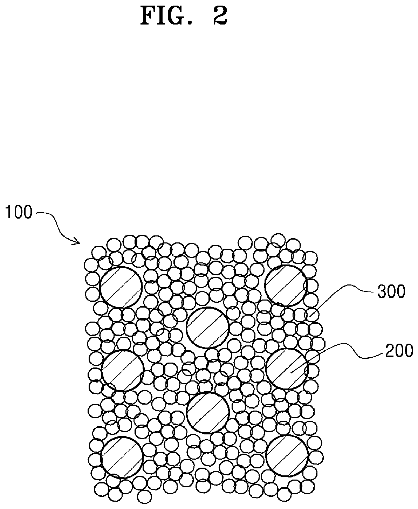

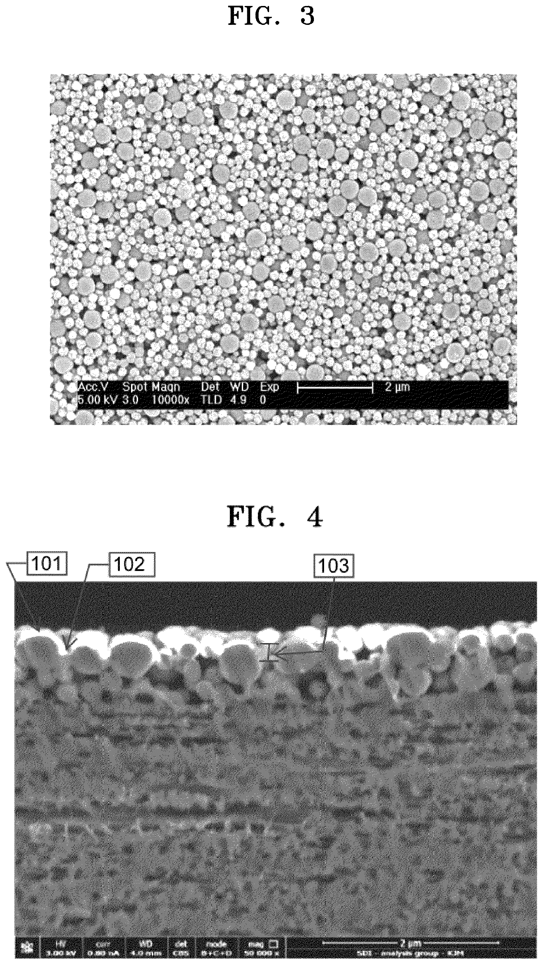

The coating layer includes the first organic particles and the second organic particles. FIG. 2 is a schematic view of a coating layer of a separator according to an embodiment. FIGS. 3 and 4 are scanning electron microscope (SEM) images of a surface and a cross-section of a separator according to an embodiment, respectively.

Referring to FIGS. 2 to 4, the coating layer 100 of the separator includes first organic particles 200 and second organic particles 300 mixed together. That is, the coating layer 100 of the separator includes the first organic particles 200 and the second organic particles 300 in mixed form in a single layer, not being present independently in separate layers. The first organic particles 200 function as an electrode adhesive for enhancing the adhesive force between the separator and the electrode. The first organic particles 200 protrude a predetermined height in embossed form from a dented portion of a surface of the porous coating layer 100.

The first organic particles protrude in embossed form from a dented portion of the surface of the porous coating layer to function as an adhesive for bonding to an electrode of the battery. To this end, an average particle diameter of the first organic particles has to be larger than an average particle diameter of the second organic particles, and the first organic particles protrude in embossed shape by a height of 0.1 µm to 0.5 µm from a dented portion of the surface of the coating layer. Preferably, the first organic particles may protrude a height of 0.1 µm to 0.4 µm from a dented portion of the surface of the coating layer. In particular, the first organic particles may protrude a height of 0.2 µm to 0.3 µm from a dented portion of the surface of the coating layer. To this end, the first organic particles may have an average particle diameter 1.1 times to 5 times larger than that of the second organic particles. For example, as shown in Fig. 4, a surface of coating layer contains an uneven structure, i.e., embossed structure, comprising a protruded portion comprised of the first organic particles and a dented portion disposed between the protruded first organic particles. For example, a height difference between top of a protruded portion comprised of the first organic particles and bottom of a dented portion disposed between the protruded first organic particles is 0.1 µm to 0.5 µm.

The first organic particles have an average particle diameter of 0.4 µm to 0.7 µm. In particular, the first organic particles may have an average particle diameter of 0.4 µm to 0.5 µm. When the first organic particles have an average particle diameter smaller than 0.4 µm, the first organic particles may not protrude from the surrounding surface of the coating layer to enable functioning as an electrode adhesive, or may not ensure air permeability, increasing resistance. When the first organic particles have an average particle diameter greater than 0.7 µm, the lithium battery may have increased resistance since the thickness of the separator is too thick.

An average separation distance between the first organic particles may be from 0.5 µm to 5.0 µm, and for example, 0.5 µm to 3.0 µm, and in particular, 0.5 µm to 1 µm. When the average separation distance between the first organic particles is less than 0.5 µm, air permeability of the first organic particles may not be ensured, leading to resistance increase. When the average separation distance between the first organic particles exceeds 5 µm, the first organic particles may not function as an electrode adhesive.

The first organic particles used in the coating layer may be any adhesive organic particles available in the art. In this regard, the first organic particles may have a glass transition temperature (T_{g}) lower than a temperature at which lamination of electrode assemblies is performed. For example, the first organic particles may have a glass transition temperature (T_{g}) of 40 °C to 70 °C. When the glass transition temperature of the first organic particles is excessively high above this range, side reactions of electrolyte may occur while the press temperature is increased to enhance the adhesion between the first organic particles and the electrodes. On the other hand, when the glass transition temperature of the first organic particles is too low, the first organic particles may form a film at a drying temperature after coating, causing a problem of a battery resistance increase.

For use in a lithium (secondary) battery, the first organic particles may have an appropriate degree of swelling in an electrolyte solution. For example, the first organic particles may be spherical particles having a degree of swelling of 200 % to 1,000% when left in an electrolyte solution at a temperature of 50 °C to 70 °C for 70 hours to 80 hours. When the degree of swelling is less than 200%, due to a reduced adhesion area between the separator and the electrode, the cell thickness may be increased during battery lifetime. On the other hand, when the degree of swelling exceeds 1,000%, the first organic particles may block pores of the separator together with the second organic particles and thus increase resistance. In addition, the first organic particles need to be indissoluble (i.e., a degree of swelling of less than about 1,000%) in a solvent or a dispersion solution in the preparation of a slurry and be maintained in particle form after coating of the slurry in order to inhibit reduction in air permeability of the separator.

The first organic particles comprise of consists of at least one of polystyrene, polyvinylidene fluoride, polymethyl methacrylate, polyacrylonitrile, polyvinylidone, polyvinyl acetate, polyethylene oxide, cellulose acetate, and azodicarbonamide. Specifically, the first organic particles may be made of polystyrene.

The first organic particles are (randomly) distributed on a surface of the coating layer in an area ratio from 5% or greater to less than 30% with respect to a total surface area of the coating layer. In other words, the first and second organic particles are mixed together and the first organic particles are distributed within the coating layer such that the first organic particles build 5% to less than 30% of the surface of the coating layer where the electrode(s) will be adhered to. For example, the first organic particles may be distributed on the surface of the coating layer in an area ratio from 5% to 20 %, in particular, from 5 % to 15 %, with respect to the total surface area of the coating layer. When the area ratio of the first organic particles to the total surface area of the coating layer is less than 5 %, the first organic particles may not exhibit good adhesion effect. When the area ratio of the first organic particles to the total surface area of the coating layer is 30 % or greater, cell performance may be deteriorated due to resistance increase. For example, the area ratio can be evaluated by measuring a ratio of a surface area covered by the first organic particle to total surface area of the coating layer on a surface image of the coating layer measured by SEM, such as FIG. 3.

The second organic particles may function as a filler. The second organic particles may enable uniform thin film coating, in comparison with inorganic fillers, and may improve air permeability, heat resistance, and insulation characteristics.

In one or more embodiments, the second organic particles may function as a support in the separator. The second organic particles as an organic filler may support the separator to inhibit shrinkage of the separator at high temperatures. By the inclusion of the organic filler in the coating layer of the separator, a sufficient porosity and improved mechanical characteristics of the separator may be ensured. When using the separator including a relatively small amount of a binder and a relatively large amount of the organic filler (i.e., the second organic particles), a lithium battery may have improved safety.

The second organic particles have an average particle diameter of 0.15 µm to 0.35 µm. For example, the second organic particles may have an average particle diameter of 0.2 µm to 0.3 µm. When the average particle diameter of the second organic particles is within these ranges, the second organic particles may form a thin coating layer having a uniform thickness, so that the separator may have a reduced thickness and an appropriate porosity.

An iron (Fe) content of the second organic particles may be about 1 ppm or less. For example, a Fe content of the second organic particles may be about 0.01 ppm to about 1 ppm. The Fe content may be measured by inductively coupled plasma (ICP) analysis. Due to the inclusion of the organic particles, the coating layer may contain a trace of Fe as described above. The separator according to one or more embodiments containing such a trace of Fe may have improved heat resistance.

The second organic particles is a cross-linked polymer. The second organic particles may be a highly cross-linked polymer without a glass transition temperature (T_{g}). When such a highly cross-linked polymer is used, the separator may have improved heat resistance, so that shrinkage of the porous substrate at high temperatures may be effectively suppressed. The second organic particles may have a thermal decomposition temperature of 200 °C or greater. For example, the second organic particles may have a thermal decomposition temperature of 200 °C to 500 °C.

The second organic particles comprise or consist of cross-linked polystyrene particles, or cross-linked polymethyl methacrylate particles.

The first organic particles or the second organic particles may have a core-shell structure. For example, the first organic particles may have a core-shell structure. For example, the second organic particles may have a core-shell structure. For example, the first organic particles and the second organic particles may both have a core-shell structure.

The core-shell structure may include a core portion and a shell portion. A weight of the shell portion may be about 50 wt% based on a total weight of the core portion. The core portion may include the same compound or polymer used for the first organic particles or second organic particles as described above. The core portion may also include a material with a shutdown function by being melted at a certain temperature.

The shell portion may include a material, for example, a thermoplastic resin having a melting point (Tₘ) of about 130 °C or less. For example, the thermoplastic resin may be polyethylene (PE), polyvinyl chloride (PVC), polypropylene (PP), polystyrene (PS), polyacrylonitrile (PAN), styreneacrylonitrile (SAN), acrylonitrile-butadiene-styrene (ABS), polymethylmethacrylate (PMMA), polytetrafluoroethylene (PTFE), polychlorotrifluoroethylene (PCTFE), or the like.

When the second organic particles have a core-shell structure, the shell portion of the second organic particles having a melting point of about 130 °C or less may be molten at a high temperature of about 130 °C or higher, and the molten shell portion may block pores between the particles and pores in the separator and provide a shutdown effect.

A weight ratio of the first organic particles to the second organic particles in the coating layer is from 50:50 to 10:90. For example, a weight ratio of the first organic particles to the second organic particles in the coating layer may be from 50:50 to 20:80, for example, from 50:50 to 30:70. When the weight ratio of the first organic particles to the second organic particles is less than 50:50, a contact area between the electrodes and the binder may be increased, leading to cell resistance increase. When the weight ratio of the first organic particles to the second organic particles exceeds 10:90, it may be difficult to attain an improved effect of adhesion to the electrodes.

The coating layer may further include inorganic particles, in addition to the first organic particles and the second organic particles. The inorganic particles may also function as a filler together with the second organic particles, may enable uniform thin film coating by being mixed with the second organic particles, may improve heat resistance of the separator, and may further reduce cell resistance.

The inorganic particles may be a metal oxide, a metalloid oxide, or a combination thereof. For example, the inorganic particles may be one or more selected from boehmite, alumina (Al₂O₃), BaSO₄, MgO, Mg(OH)₂, clay(clay), silica(SiO₂), and TiO₂. For example, the inorganic particles may be AIO(OH), Al₂O₃, SiO₂, TiO₂, SnO₂, CeO₂, NiO, CaO, ZnO, MgO, ZrO₂, Y₂O₃, SrTiO₃, BaTiO₃, MgF₂, Mg(OH)₂, or a combination thereof. The coating layer may be arranged on one or both surfaces of the substrate. For example, the coating layer may be arranged on only one surface of the substrate, not the other surface of the substrate. For example, the coating layer may be arranged on each of the two surfaces of the substrate.

A single (each) coating layer may have a thickness of 0.3 µm to 3.0 µm. That is, by control of the average particle sizes of the first organic particles and the second organic particles and the weight ratio of the first organic particles to the second organic particles within predetermined ranges, the coating layer of the separator according to one or more embodiments may have improved adhesion to the electrodes and improved binding strength to the substrate, and thus may be formed uniform and thin. For example, a single (each) coating layer may have a thickness of 0.3 µm to 2.0 µm, for example, 0.3 µm to 1.5 µm, for example, 0.3 µm to 1.0 µm, or for example, 0.3 µm to 0.5 µm. For example, a first coating layer on one surface of the substrate may have a thickness of about 0.5 µm, and a second coating layer on the opposing surface of the substrate may have a thickness of about 0.5 µm. When the coating layer(s) (e.g., the first coating layer and/or the second coating layer) each have a thickness within these ranges, the separator including the coating layer may have improved adhesive force and improved air permeability. For example, the (each) coating layer may be formed to have a thickness of about 1 µm or less. Accordingly, the entire (cumulative) thickness of the separator and the thickness of an electrode assembly may be reduced. This may increase capacity per volume of the battery.

The coating layer may further include cellulose nanofibers. By the further inclusion of the cellulose nanofibers, binding of the first organic particles and the second organic particles in the coating layer may become strong, and the separator may have improved heat resistance. The cellulose nanofibers may have an adhesive function due to its own adhesion, without using an additional binder polymer.

Cellulose as a main component of plant cell membranes may constitute plant fibers, and is also called fibers. Cellulose may refer to a polymer compound consisting of D-glucoses linked in a straight chain form by β-(1→4)-glycosidic linkage. Types of the cellulose may include cellulose nanofibers separated from nano-sized wood materials, seaweed nanofibers, and bacterial celluloses obtained from bacteria by incubation. Examples of the cellulose are ethylcellulose, methylcellulose, hydroxypropyl cellulose, hydroxyethyl cellulose, hydroxypropyl methyl cellulose, hydroxyethyl methyl cellulose, carboxymethyl cellulose, cellulose acetate, cellulose triacetate, cellulose acetate phthalate, nitrocellulose, cellulose acetate butyrate, and cellulose acetate propionate.

The cellulose nanofibers may have an average diameter of about 1 nm to about 300 nm. For example, the cellulose nanofibers may have an average diameter of about 1 nm to about 200 nm, for example, about 10 nm to about 100 nm, or for example, about 10 nm to about 50 nm. When the average diameter of the cellulose nanofibers is less than 1 nm, it may not possible to process cellulose into fiber form, and the cellulose nanofibers may have an unnecessarily high viscosity. On the other hand, when the average diameter of the cellulose nanofibers exceeds 300 nm, the cellulose fibers may have poor surface roughness.

The cellulose nanofibers may have an average length of about 1 nm to about 500 nm. For example, the cellulose nanofibers may have an average length of about 1 nm to about 300 nm, for example, about 10 nm to about 200 nm, or for example, about 10 nm to about 100 nm. When the average length of the cellulose nanofibers is less than 1 nm, the cellulose nanofibers may have an unnecessarily high viscosity. When the average length of the cellulose nanofibers exceeds 500 nm, the cellulose nanofibers may have poor surface roughness.

The coating layer may further include third organic particles having a shutdown function. That is, the third organic particles may clog pores in the separator by being melted at a certain temperature, thereby blocking current flow. The term "shutdown" may refer to the clogging of pores in the separator in response to a temperature rise of a lithium battery to block migration of lithium ions, thereby preventing thermal runaway. The shutdown temperature may refer to the temperature at which the shutdown occurs.

In one or more embodiments, when a lithium battery is exposed to a high temperature, the third organic particles may first melt down, before the thermal runaway occurs, forming a polymer thin film on at least one surface of the substrate of the separator or permeating into the pores in the substrate of the separator to disrupt migration of the electrolyte solution, thus blocking current flow and improving safety of the lithium battery.

The third organic particles may have a melting point (Tₘ) of 100 °C to 130 °C, for example, 110 °C to 120 °C. When the melting point of the third organic particles is lower than the shutdown temperature of the porous substrate, the pores of the porous substrate may be blocked before a thermal runaway occurs in the lithium battery. Accordingly, the lithium battery may have further improved safety.

An average particle diameter of the third organic particles may be freely chosen in principle, as long as not blocking the pores in the separator during preparation of the separator. The average particle diameter of the third organic particles may be larger than the pore size of the porous substrate of the separator. For example, the third organic particles may have an average particle diameter of 0.1 µm to 1 µm, for example, 0.1 µm to 0.5 µm, or for example, 0.2 µm to 0.3 µm.

For example, the third organic particles may be natural or artificial wax, a (low-melting point) polymer, for example, polyolefin, or a mixture thereof. The third organic particles may be appropriately chosen to block the pores of the separator by being melted at a target shutdown temperature and further prevent release of ions. For example, the third organic particles may be polyethylene wax.

The coating layer may further include an organic binder polymer to enhance the binding of the second organic particles functioning as a filler. For example, the organic binder polymer may be polyvinylidene fluoride-co-hexafluoropropylene, polyvinylidene fluoride-co-trichloroethylene, polymethylmethacrylate, polybutylacrylate, polyacrylonitrile, polyvinylpyrrolidone, polyvinylacetate, polyvinyl alcohol, polyethylene-co-vinyl acetate, polyethylene oxide, polyarylate, cellulose acetate, cellulose acetate butyrate, cellulose acetate propionate, cyanoethylpullulan, cyanoethyl polyvinyl alcohol, cyanoethyl cellulose, cyanoethyl sucrose, pullulan, or carboxyl methyl cellulose. An amount of the binder in the coating layer may be greater than 0 to 50 part by weight, 1 to 30 parts by weight, or 5 to 15 parts by weight, with respect to 100 parts by weight of the total organic particles comprising the first organic particles and the second organic particles.

A solvent for the organic binder polymer may have a similar solubility index similar to that of the organic binder polymer and may have a low boiling point. This is for uniform mixing and easy removal of the solvent. For example, the solvent may be acetone, tetrahydrofuran, methylene chloride, chloroform, dimethylformamide, N-methyl-2-pyrrolidone, cyclohexane, water, or a mixture thereof.

The organic binder polymer included in the coating layer may be an aqueous binder having a glass transition temperature (T_{g}) of about -50 °C or higher and being as particles after coating and drying. For example, the organic binder polymer may include acrylate or styrene. When the aqueous binder is used, this may enable uniform coating and improve air permeability. The organic binder polymer which may be added in the coating layer may be, for example, polyvinyl alcohol, polyacrylic acid, polyacrylamide, or polyvinypyrrolidone. These binders may enhance the binding of the first organic particles and the second organic particles, and adhesion to the separator.

The coating layer may have a single-layer or multilayer structure. The multilayer structure may be a 2-layer structure, a 3-layer structure, or a 4-layer structure. However, embodiments are not limited to these structures. Any appropriate structure may be chosen according to required characteristics of the separator.

When such coating layers are arranged on opposite surfaces of the separator, respectively, the coating layers may have the same composition. By the arrangement of the coating layers having the same composition on the respective opposite surfaces of the separator, substantially the same adhesive force may act on between the opposite surfaces of the separator and corresponding electrode active material layers, so that volume changes of the lithium battery may be uniformly suppressed.

### Separator preparation method

According to an aspect of the disclosure, a method of preparing the separator according one or more embodiments include: (a) preparing a slurry including the first organic particles and the second organic particles; and (b) coating the slurry on at least one surface of a substrate and drying a coated resultant.

In one or more embodiments, in the step (b), the slurry may be coated on opposite surfaces of the substrate. For example, the slurry may be coated on the opposite surface of the substrate at the same time.

The slurry may further include cellulose nanofibers, and/or third organic particles having a melting point (Tₘ) of 100 °C to 130 °C.

The separator may be formed by coating a slurry on the porous substrate. The method of coating the slurry is not specifically limited, and any coating method available in the art may be used. For example, the separator may be formed by, for example, printing, compression, press fitting, blade coating, brush coating, dipping, spraying, or casting.

In one or more embodiments, immediately after or at substantially the same time with the coating of the slurry for forming the porous coating layer, an aqueous dispersion solution of an aqueous binder compound may be coated on the slurry to form an adhesive layer. For example, a dispersion medium for the dispersion solution for forming the adhesive layer may be water.

In one or more embodiments, the drying may be performed using any method known in the art. For example, the drying may be performed in a batch or continuous manner using an oven or a heating chamber in an appropriate temperature range in consideration of a vapor pressure of the used solvent. The drying may be to remove almost of the solvent from the slurry. The drying time may be as short as possible in terms of productivity. For example, the drying may be performed for about 1 minute or less, for example, about 30 seconds or less.

In one or more embodiments, the separator may have an increase in air permeability (an increase in Gurley value) of about 15 seconds to about 50 seconds per 100 mL of air with respect to a porous substrate without coating layer. For example, the separator may have an increase in air permeability increase rate of about 15 seconds to about 40 seconds per 100 mL of air, for 15 seconds to about 30 seconds per 100 mL of air. When the increase in air permeability of the separator is within these ranges, internal resistance increase of the lithium battery may be effectively suppressed.

In one or more embodiments, the separator may have a breakdown voltage (BDV) of about 0.5 kV to about 3.0 kV. For example, the separator may have a BDV of about 0.6 kV to about 2.5 kV, for example, a BDV of about 0.7 kV to about 2.0 kV, or for example, about 0.8 kV to about 1.8 kV. When the separator has a BDV within these ranges, a short-circuit failure or an open circuit voltage (OCV) drop, caused by foreign substance in the battery, may be improved.

In one or more embodiments, a BDV increase due to the presence of the coating layer in the separator may be about 0.1 kV or more, for example, about 0.13 kV or greater, for example, about 0.16 kV or greater, or for example, about 0.16 kV to about 0.2 kV. In general, inorganic particles have conductive characteristics at a high voltage, and may not efficiently enhance insulation characteristics. However, according to the one or more embodiments, the separator may enhance insulation characteristics with the coating layer consisting of organic particles, and thus improving insulation characteristic reduction caused due to thin-film coating.

In one or more embodiments, the separator may have a water content of about 400 ppm or less. For example, the separator may have a water content of about 350 ppm or less, for example, about 200 ppm to about 350 ppm. For example, the separator may have a water content per unit thickness of about 40 ppm/µm or less. The moisture present in a battery may cause cell deterioration due to the generation of hydrogen fluoride (HF) or byproducts as a result of side reaction. In one or more embodiments, the separator using organic particles may inhibit moisture adsorption and moisture retention.

The separator according to one or more embodiments prepared using a method as described above may be used as a separator in a lithium battery.

### Lithium battery

According to another aspect of the disclosure, a lithium battery includes: a positive electrode; a negative electrode, and the separator according to any of the embodiments between the positive electrode and the negative electrode. By the inclusion of the separator according to any of the embodiments, the lithium battery may have the increase adhesion between the electrodes (positive electrode and negative electrode) and the separator, and volume changes of the lithium battery during charging and discharging may be suppressed. Accordingly, the lithium battery may be prevented from deterioration caused due to such volume changes of the lithium battery, and thus have improved safety and lifetime characteristics.

In one or more embodiments, the lithium battery may have a 3-point bending strength of about 100 N to about 700 N. For example, the lithium battery may have a 3-point bending strength of about 150 N to about 700 N, for example, about 200 N to about 700 N, or for example, about 300 N to about 700 N. When the bending strength of the lithium battery is 100 N or less, due to low adhesion strength between the separator and the electrodes, cell deformation during charging and discharging may not be suppressed, and the lithium battery may be deformed.

For example, the lithium battery may be manufactured in the following manner.

First, a negative active material, a conducting agent, a binder, and a solvent may be mixed together to prepare a negative active material composition. The negative active material composition may be directly coated on a metallic current collector and dried to form a negative electrode plate. In some embodiments, the negative active material composition may be cast on a separate support to form a negative active material film. This negative active material film may then be separated from the support and laminated on a metallic current collector to thereby form a negative electrode plate. The negative electrode is not limited to the above-described forms, and may have any form.

The negative active material may be a non-carbonaceous material. For example, the negative active material may include at least one selected from lithium metal, a metal that is alloyable with lithium, and alloys and oxides of a metal that is alloyable with lithium.

Examples of the metal alloyable with lithium are Si, Sn, Al, Ge, Pb, Bi, Sb, a Si-Y alloy (wherein Y may be an alkali metal, an alkali earth metal, a Group 13 to Group 16 element, a transition metal, a rare earth element, or a combination thereof, and Y is not Si), and a Sn-Y alloy (wherein Y may be an alkali metal, an alkali earth metal, a Group 13 to Group 16 element, a transition metal, a rare earth element, or a combination thereof, and Y is not Sn). In some embodiments, Y may be magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium (In), germanium (Ge), phosphorus (P), arsenic (As), antimony (Sb), bismuth (Bi), sulfur (S), selenium (Se), tellurium (Te), polonium (Po), or combinations thereof.

For example, the negative active material may be a lithium titanium oxide, a vanadium oxide, or a lithium vanadium oxide.

For example, the negative active material may be SnO₂ or SiOₓ (wherein 0<x≤2).

For example, the negative active material may be at least one selected from the group consisting of Si, Sn, Pb, Ge, Al, SiOₓ (wherein 0<x≤52), SnO_{y} (wherein 0<y≤5), Li₄Ti₅O₁₂, TiO₂, LiTiO₃, and Li₂Ti₃O₇. However, embodiments are not limited thereto. Any non-carbonaceous negative active material available in the art may be used.

For example, the negative active material may be a composite of a non-carbonaceous negative active material as described above and a carbonaceous material. For example, the negative active material may further include, in addition to such a non-carbonaceous negative active material as described above, and a carbonaceous negative active material.

The carbonaceous material may be crystalline carbon, amorphous carbon, or a mixture thereof. The crystalline carbon may be, for example, graphite such as natural graphite or artificial graphite in non-shaped, plate-like, flake-like, spherical or fibrous form. The amorphous carbon may be soft carbon (carbon sintered at low temperatures), hard carbon, meso-phase pitch carbides, sintered cokes, or the like.

The conducting agent may be, for example, natural graphite, artificial graphite, carbon black, acetylene black, ketjen black, carbon fibers, metal powder or metal fibers of such as copper, nickel, aluminum, silver, or the like. For example, the conducting agent may be used together with one or more conductive material such as polyphenylene derivatives. However, embodiments are not limited thereto. Any conducting agent available in the art may be used. The above-listed examples of the crystalline carbonaceous material may be used together as an additional conducting agent.

For example, the binder may be a vinylidene fluoride/hexafluoropropylene copolymer, polyvinylidene fluoride (PVDF), polyacrylonitrile, polymethylmethacrylate, polytetrafluoroethylene, mixtures thereof, and a styrene butadiene rubber polymer. However, embodiments are not limited thereto. Any material available as a binder in the art may be used.

For example, the solvent may be N-methyl-pyrrolidone, acetone, or water. However, embodiments are not limited thereto. Any material available as a solvent in the art may be used.

The amounts of the positive active material, the conducting agent, the binder, and the solvent may be the levels as commonly used in lithium batteries. At least one of the conducting agent, the binder, and the solvent may be omitted according to the use and the structure of the lithium battery.

The binder used in the preparation of the negative electrode may be the same as a binder composition included in the coating layer of the separator.

Next, a positive active material, a conducting agent, a binder, and a solvent may be mixed together to prepare a positive active material composition. The positive active material composition may be directly coated on a metallic current collector and dried to form a positive electrode plate. In some embodiments, the positive active material composition may be cast on a separate support to form a positive active material film. This positive active material film may then be separated from the support and laminated on a metallic current collector to thereby form a positive electrode plate.

The positive active material may include at least one selected from the group consisting of lithium cobalt oxide, lithium nickel cobalt manganese oxide, lithium nickel cobalt aluminum oxide, lithium iron phosphate, and lithium manganese oxide. However, embodiments are not limited thereto. Any positive active material available in the art may be used.

For example, the positive active material may be a compound represented by one of the following formulae: LiₐA_{1-b}B_{b}D₂ (wherein 0.90 ≤ a ≤ 1.8, and 0 ≤ b ≤ 0.5); LiₐE_{1-b}B_{b}O_{2-c}D_{c} (wherein 0.90 ≤ a ≤ 1.8, 0 ≤ b ≤ 0.5, and 0 ≤ c ≤ 0.05); LiE_{2-b}B_{b}O_{4-c}D_{c} (wherein 0 ≤ b ≤ 0.5, and 0 ≤ c ≤ 0.05); LiₐNi_{1-b-c}CO_{b}B_{c}D_{α} (wherein 0.90 ≤ a ≤ 1.8, 0 ≤ b ≤ 0.5, 0 ≤ c ≤ 0.05, and 0 < α ≤ 2); LiₐNi_{1-b-c}Co_{b}B_{c}O_{2-α}F_{α} (wherein 0.90 ≤ a ≤ 1.8, 0 ≤ b ≤ 0.5, 0 ≤ c ≤ 0.05, and 0 < α < 2); LiₐNi_{1-b-c}Co_{b}B_{c}O_{2-α}F₂ (wherein 0.90 ≤ a ≤ 1.8, 0 ≤ b ≤ 0.5, 0 ≤ c ≤ 0.05, and 0 < α < 2); LiₐNi_{1-b-c}Mn_{b}B_{c}D_{α} (wherein 0.90 ≤ a ≤ 1.8, 0 ≤ b ≤ 0.5, 0 ≤ c ≤ 0.05, and 0 < α ≤ 2); LiₐNi_{1-b-c}Mn_{b}B_{c}O_{2-α}F_{α} (wherein 0.90 ≤ a ≤ 1.8, 0 ≤ b ≤ 0.5, 0 ≤ c ≤ 0.05, and 0 < α < 2); LiₐNi_{1-b-c}Mn_{b}B_{c}O_{2-α}F₂ (wherein 0.90 ≤ a ≤ 1.8, 0 ≤ b ≤ 0.5, 0 ≤ c ≤ 0.05, and 0 < α < 2); LiₐNi_{b}E_{c}G_{d}O₂ (wherein 0.90 ≤ a ≤ 1.8, 0 ≤ b ≤ 0.9, 0 ≤ c ≤ 0.5, and 0.001 ≤ d ≤ 0.1); LiₐNi_{b}Co_{c}Mn_{d}GeO₂ (wherein 0.90 ≤ a ≤ 1.8, 0 ≤ b ≤ 0.9, 0 ≤ c ≤ 0.5, 0 ≤ d ≤0.5, and 0.001 ≤ e ≤ 0.1); LiₐNiG_{b}O₂ (wherein 0.90 ≤ a ≤ 1.8, and 0.001 ≤ b ≤ 0.1); LiₐCoG_{b}O₂ (wherein 0.90 ≤ a ≤ 1.8, and 0.001 ≤ b ≤ 0.1); LiₐMnG_{b}O₂ (wherein 0.90 ≤ a ≤ 1.8, and 0.001 ≤ b ≤ 0.1); LiₐMn₂G_{b}O₄ (wherein 0.90 ≤ a ≤ 1.8, and 0.001 ≤ b ≤ 0.1); QO₂; QS₂; LiQS₂; V₂O₅; LiV₂O₅; LilO₂; LiNiVO₄; Li_{(3-f)}J₂(PO₄)₃ (wherein 0 ≤ f ≤ 2); Li(_{3-f)}Fe₂(PO₄)₃ (wherein 0 ≤ f ≤ 2); and LiFePO₄.

In the formulae above, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof.

The compounds listed above as positive active materials may have a surface coating layer (hereinafter, also referred to as "coating layer"). Alternatively, a mixture of a compound without a coating layer and a compound having a coating layer, the compounds being selected from the compounds listed above, may be used. In some embodiments, the coating layer may include at least one compound of a coating element selected from the group consisting of oxide, hydroxide, oxyhydroxide, oxycarbonate, and hydroxycarbonate of the coating element. In some embodiments, the compounds for the coating layer may be amorphous or crystalline. In some embodiments, the coating element for the coating layer may be magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or a mixture thereof. In some embodiments, the coating layer may be formed using any method that does not adversely affect the physical properties of the positive active material when a compound of the coating element is used. For example, the coating layer may be formed using a spray coating method, or a dipping method. The coating methods may be well understood by one of ordinary skill in the art, and thus a detailed description thereof will be omitted.

For example, the positive active material may be LiNiO₂, LiCoO₂, LiMnₓO₂ₓ (wherein x=1 or 2), LiNi₁₋ₓMnₓO₂ (wherein 0<x<1), LiNi_{1-x-y}CoₓMn_{y}O₂ (wherein 0≤x≤0.5 and 0≤y≤0.5), LiFeO₂, V₂O₅, TiS, or MoS. In some embodiments, the positive active material may be LiCoO₂, LiMnₓO₂ₓ (wherein x=1 or 2), LiNi₁₋ₓMnₓO₂ₓ (wherein 0<x<1), LiNi_{i-x-y}CoₓMn_{y}O₂ (wherein 0≤x≤0.5 and 0≤y≤0.5), or LiFePO₄.

The conducting agent, the binder, and the solvent used in the positive active material composition may be the same as those used in the negative active material composition. In one or more embodiments, a plasticizer may be further added to the positive active material composition and/or the negative active material composition to obtain electrode plates including pores.

The amounts of the positive active material, the conducting agent, the binder as a common binder, and the solvent may be the levels as commonly used in lithium batteries. At least one of the conducting agent, the binder, and the solvent may be omitted according to the use and the structure of the lithium battery.

The binder used in the preparation of the positive electrode may be the same as a binder composition included in the coating layer of the separator.

Next, the separator according to any of the above-described embodiments may be arranged between the positive electrode and the negative electrode.

In an electrode assembly including the positive electrode, the separator, and the negative electrode, as described above, the separator between the positive electrode and the negative electrode may include a substrate and a coating layer on at least one surface of the substrate, wherein the coating layer may include first organic particles and second organic particles as described above, and an average particle diameter of the first organic particles may be larger than an average particle diameter of the second organic particles, and the first organic particles may protrude a height of about 0.1 µm to about 0.5 µm from a surface of the coating layer and may be distributed in the surface of the coating layer in an area ratio from about 5% or greater to less than 30% with respect to a total surface area of the coating layer.

The separator according to any of the embodiments may be arranged between the positive electrode and the negative electrode. In some embodiments, an electrode assembly including a positive electrode, the separator according to any of the embodiments, and a negative electrode as described above may be wound in a jelly roll type, which may then be put into a battery case or a pouch, and thermally soften under pressure. After pre-charging, the charged jelly roll may be charged and discharged under pressure, thereby completing a formation process. A detailed method of preparing the separator is described above, and thus will not be provided here.

Next, an electrolyte may be prepared.

The electrolyte may be in a liquid or gel state. For example, the electrolyte may be an organic electrolyte solution. The electrolyte may be in a solid state. For example, the electrolyte may be boron oxide, lithium oxynitride, or the like. However, embodiments are not limited thereto. Any material available as a solid electrolyte in the art may be used. In one or more embodiments, the solid electrolyte may be formed on the negative electrode by, for example, sputtering.

For example, the organic electrolyte solution may be prepared by dissolving a lithium salt in an organic solvent.

The organic solvent may be any solvent available as an organic solvent in the art. For example, the organic solvent may be propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, γ-butyrolactone, dioxorane, 4-methyldioxorane, N,N-dimethyl formamide, dimethyl acetamide, dimethylsulfoxide, dioxane, 1,2-dimethoxyethane, sulforane, dichloroethane, chlorobenzene, nitrobenzene, diethylene glycol, dimethyl ether, or a mixture thereof.

In one or more embodiments, the lithium salt may be any material available as a lithium salt in the art. For example, the lithium salt may be LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (wherein x and y are each independently a natural number), LiCl, Lil, or a mixture thereof.

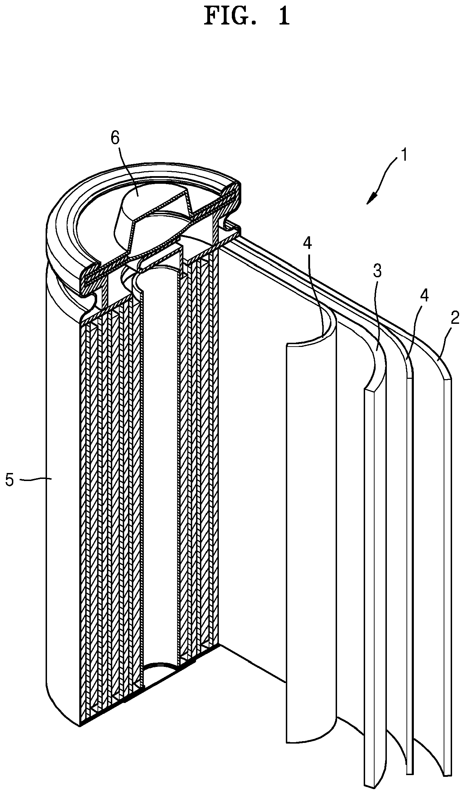

Referring to FIG. 1, a lithium battery 1 according to an embodiment may include a positive electrode 3, a negative electrode 2, and a separator 4. The positive electrode 3, the negative electrode 2, and the separator 4 may be wound or folded, and then sealed in a battery case 5. The battery case 5 may be filled with an organic electrolyte solution and sealed with a cap assembly 6, thereby completing the manufacture of the lithium battery 1. The battery case 5 may be a cylindrical type, a rectangular type, or a thin-film type. For example, the lithium battery 1 may be a thin-film type battery. For example, the lithium battery 1 may be a lithium ion battery. For example, the lithium battery 1 may be a lithium polymer battery.

In one or more embodiments, the separator may be arranged between the positive electrode and the negative electrode to thereby form an electrode assembly. In some embodiments, the electrode assembly may be stacked on another in a bi-cell structure or wound in a jelly roll type, and then be impregnated with an organic electrolyte solution. The resultant assembly may be put into a pouch and hermetically sealed, thereby completing the manufacture of a lithium ion polymer battery.

In some embodiments, a plurality of electrode assemblies may be stacked to form a battery pack, which may be used in any device that requires high capacity and high output, for example, in a laptop computer, a smart phone, or an electric vehicle.

The lithium battery may have improved high rate characteristics and lifetime characteristics, and thus may be used in an electric vehicle (EV), for example, in a hybrid vehicle such as a plug-in hybrid electric vehicle (PHEV).

One or more embodiments of the inventive concept will now be described in detail with reference to the following examples. However, these examples are only for illustrative purposes and are not intended to limit the scope of the one or more embodiments of the inventive concept.

### (Preparation of separator)

### Preparation Example 1: 15 % (by area ratio) of first organic particles with respect to total surface area of coating layer

75 parts by weight of cross-linked polymethylmethacrylate (PMMA, available from ZEON) having an average particle diameter (D50) of about 0.23 µm as second organic particles (filler), 25 parts by weight of polystyrene (PS, ZEON) having an average particle diameter (D50) of about 0.4 µm as first organic particles (electrode adhesive), and 10 parts by weight of polyvinyl alcohol (PVA, available from Kuraray) as a binder were mixed together to prepare a slurry for forming a coating layer. The first organic particles had a degree of swelling of about 800% when left in an electrolyte solution at about 60 °C for about 72 hours.

The slurry for forming a coating layer was coated by Gravure printing on opposite surfaces of a polyethylene porous substrate having a BDV of about 0.85 KV, a thickness of about 7.5 µm and an air permeability (Gurley value) of about 110 seconds/100 cc to form the coating layer including a blend of the first organic particles and the second organic particles on each of the surfaces of the porous substrate, each coating layer having a thickness of about 0.5 µm, thereby forming a separator. A thickness of the coating layers on the opposite surfaces of the separator were 0.5 µm and 0.5 µm, respectively. The separator had a thickness of about 8.5 µm. The separator had an air permeability (Gurley value) of about 130 seconds/100cc, i.e., the time it takes to flow 100 cc of air through the separator was about 130 seconds, and the separator had a BDV of about 1.01 Kv and a water content of about 287 ppm.

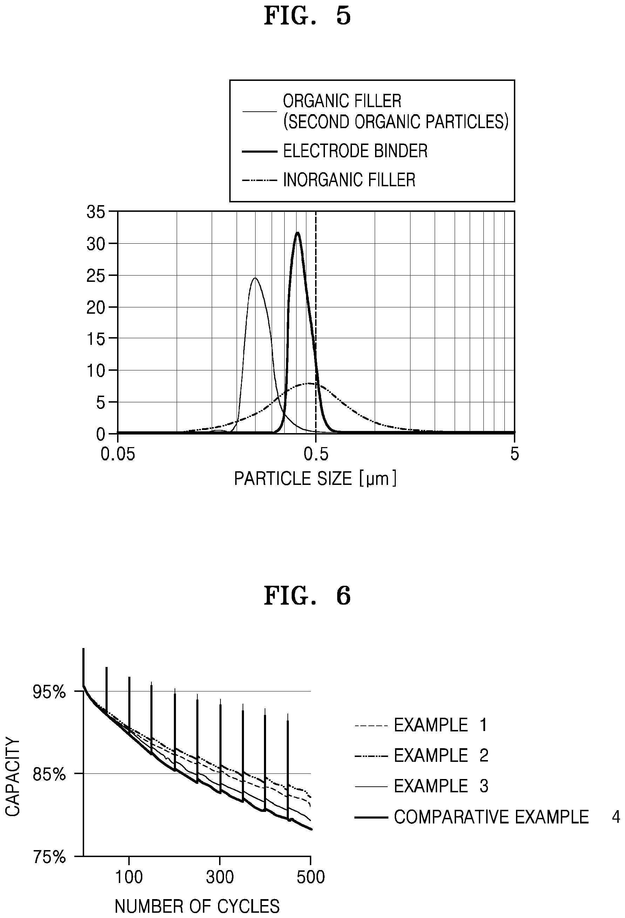

The particle diameter distribution of the second organic particles (as a filler) according to Preparation Example 1 is shown in FIG. 5, together with that of an inorganic filler used in Comparative Preparation Example 1, which will be described later.

Referring to FIG. 5, the second organic particles (as a filler) were found to have a uniform particle diameter distribution, while the inorganic filler used in Comparative Preparation Example 1 was found to have a wide particle diameter distribution.

### Preparation Example 2: 7 % (by area ratio) of first organic particles with respect to total surface area of coating layer

A separator was prepared in the same manner as in Preparation Example 1, except that 85 parts by weight of the second organic particles and 15 parts by weight of the first organic particles were mixed, and polymethylmethacrylate was used as the binder, instead of polyvinyl alcohol (PVA).

### Preparation Example 3: 28 % (by area ratio) of first organic particles with respect to total surface area of coating layer

A separator was prepared in the same manner as in Preparation Example 1, except that 54 parts by weight of the second organic particles and 46 parts by weight of the first organic particles were mixed, and polymethylmethacrylate was used as the binder, instead of polyvinyl alcohol (PVA).

### Preparation Example 4: Coating layer thickness of 1.0 um on each substrate surface

A separator was prepared in the same manner as in Preparation Example 1, except that the slurry for forming the coating layer was coated on the opposite surfaces of the porous substrate to a thickness of about 1.0 µm to form the coating layers each having a thickness of about 1.0 µm on the opposite surfaces of the coating layer, respectively.

### Comparative Preparation Example 1: Use of first organic particles and inorganic particles

A separator was prepared in the same manner as in Preparation Example 1, except that alumina (Al₂O₃, AES-11, available from Sumitomo Chemical Co., Ltd.) as inorganic particles having an average particle diameter of about 0.4 µm to about 0.6 µm (D50 on a volume basis) was used instead of the second organic particles.

### Comparative Preparation Example 2: Use of inorganic particles

A commercially available separator (SK, T14-715CB) with a ceramic coating layer having a thickness of about 2 µm on a surface of a porous substrate having a thickness of about 12 µm was used.

### Comparative Preparation Example 3: 3 % (by area ratio) of first organic particles with respect to total surface area of coating layer

A separator was prepared in the same manner as in Preparation Example 1, except that 97 parts by weight of the second organic particles and 3 parts by weight of the first organic particles were mixed.

### Comparative Preparation Example 4: 35 % (by area ratio) of first organic particles with respect to total surface area of coating layer

A separator was prepared in the same manner as in Preparation Example 1, except that 45 parts by weight of the second organic particles and 55 parts by weight of the first organic particles were mixed.

### Comparative Preparation Example 5: Coating with inorganic particles having an average particle diameter of 0.35 um

A separator was prepared in the same manner as in Preparation Example 1, except that inorganic particles (alumina, Al₂O₃, Nabaltec) having an average particle diameter of about 0.35 µm (D50 on a volume basis) was used instead of the second organic particles.

### Comparative Preparation Example 6: Coating with inorganic particles having an average particle diameter of 0.15 um

A separator was prepared in the same manner as in Preparation Example 1, except that inorganic particles (alumina, Al₂O₃, Evonik) having an average particle diameter of about 0.15 µm (D50 on a volume basis) was used instead of the second organic particles.

### Comparative Preparation Example 7: Coating with inorganic particle having an average particle diameter of 0.35 um and coating layer thickness of 1.0 um on each substrate surface

A separator was prepared in the same manner as in Preparation Example 1, except that inorganic particles (alumina, Al₂O₃, Nabaltec) having an average particle diameter of about 0.35 µm (D50 on a volume basis) was used instead of the second organic particles, and the slurry for forming a coating layer was coated on opposite surfaces of the porous substrate to form coating layers each having a thickness of 1.0 µm on the opposite surfaces of the porous substrate.

### (Manufacture of lithium battery)

### Example 1

### (Manufacture of negative electrode)

97wt% of graphite particles having an average particle diameter of about 25 µm (C1SR, Nippon Carbon), 1.5wt% of a styrene-butadiene rubber (SBR) binder (Zeon), and 1.5wt% of carboxymethylcellulose (CMC, NIPPON A&L) were mixed together, added to distilled water, and then agitated with a mechanical stirrer for about 60 minutes, to thereby prepare a negative active material slurry. The slurry was coated on a copper current collector having a thickness of about 10 µm with a doctor blade, dried in a 100°C hot-air drier for about 0.5 hours, dried further under vacuum at about 120°C for about 4 hours, and then roll-pressed to manufacture a negative electrode plate.

### (Manufacture of positive electrode)

97wt% of LiCoO₂, 1.5wt% of carbon black powder as a conducting agent, and 1.5wt% of polyvinylidene fluoride (PVdF, SOLVAY) were mixed together, added to N-methyl-2-pyrrolidone solvent, and then agitated with a mechanical stirrer for about 30 minutes, to thereby prepare a positive active material slurry. The slurry was coated on an aluminum current collector having a thickness of about 20 µm with a doctor blade, dried in a 100°C hot-air drier for about 0.5 hours, dried further under vacuum at about 120°C for about 4 hours, and then roll-pressed to manufacture a positive electrode plate.

### (Electrode assembly jelly roll)

The separator prepared in Preparation Example 1 was disposed between the positive electrode plate and the negative electrode plate, and then wound to form an electrode assembly in the form of a jelly roll. This jelly roll was put into a pouch. After an electrolyte solution was injected into the pouch, the pouch was vacuum-sealed.

The electrolyte solution included 1.3M LiPF₆ dissolved in a mixed solvent of ethylene carbonate (EC), ethyl methyl carbonate (EMC), and diethyl carbonate (DEC) in a ratio of 3:5:2 (by volume).

While thermally softening the jelly roll in the pouch at about 70°C under a pressure of 250 kgf/cm² for about 1 hour, the jelly roll was pre-charged to about 50% of SOC (State of Charge).

Then, after degassing the pouch, the jelly roll was charged with a constant current of 0.2 C rate at about 45 °C under a pressure of 200 kgf/cm² for about 1 hour until a voltage of about 4.3V was reached, then charged with a constant voltage of 4.3 V until a cutoff current of 0.05 C was reached, and then discharged with a constant current of 0.2 C until a voltage of 3.0 V was reached. This charge and discharge cycle was repeated 5 times to complete a formation process.

### Examples 2 to 4

Lithium batteries were manufactured in the same manner as in Example 1, except that the separators prepared in Preparation Examples 2 to 4 were used, respectively.

### Comparative Examples 1 to 7

Lithium batteries were manufactured in the same manner as in Example 1, except that the separators prepared in Comparative Preparation Examples 1 to 7 were used, respectively.

### Evaluation Example 1: Evaluation of surface morphology of separator

A surface and a cross-section of the separator of Preparation Example 1 were analyzed by scanning electron microscopy (SEM).The results are shown in FIGS. 3 and 4.

Referring to FIGS. 3 and 4, in the separator of Preparation Example 1, the first organic particles were found to protrude in embossed form. Referring to FIG. 4, the first organic particles protrude in a height of 0.1 µm to 0.5 µm from a dented portion disposed between the first organic particles of a surface of the porous coating layer.

Morphology characteristics of the coating layer of each of the separators prepared in Preparation Examples 1 to 4 and Comparative Preparation Examples 5 and 6 were analyzed by SEM. The results are shown in Table 1.

**Table 1**

| Example | First organic particles | | | | Second organic particles |
|---|---|---|---|---|---|
| | Area ratio (%) | Number per area (13 µm × 9 µm) | Degree of swelling (%) | Particle diameter ( µm) | Particle diameter ( µm) |
| Preparation Example 1 | 15 | 90 | 800 | 0.4 | 0.23 |
| Preparation Example 2 | 7 | 40 | 1000 | 0.6 | 0.30 |
| Preparation Example 3 | 28 | 160 | 300 | 0.5 | 0.20 |
| Preparation Example 4 | 15 | 90 | 800 | 0.4 | 0.23 |
| Comparative Preparation Example 5 | 15 | 80 | 800 | 0.4 | 0.35 (Inorganic particles) |
| Comparative Preparation Example 6 | 15 | 80 | 800 | 0.4 | 0.15 (Inorganic particles) |

Referring to Table 1, in the separators of Preparation Examples 1 to 3, including the first organic particles and the second organic particles, an area ratio of the first organic particles was found to be about 15 %, about 7 %, and about 28 %, respectively, with respect to total surface area of the substrate. The number of the first organic particles in unit area (13 µm × 9 µm) was found to be about 90, about 40, and about 160, respectively, in the separators of Preparation Examples 1 to 3. In the separator of Preparation Example 4 having a thick coating layer of about 1.0 µm on each substrate surface, the area ratio of the first organic particles, and the number thereof per unit area (13 µm × 9 µm) were found to be similar to those in the separator of Preparation Example 1.

In the separators of Comparative Preparation Examples 5 and 6 using the inorganic particles instead of the second organic particles, the area ratio of the first organic particles and the number thereof per unit area (13 µm × 9 µm) were also found to be similar to those in the separator of Preparation Example 1. However, the separator of Comparative Preparation Example 5 using the inorganic particles having an average particle diameter (D50) of about 0.35 µm was found to include local regions remaining uncoated.

### Evaluation Example 2: Evaluation of insulation characteristics of separator

Insulation characteristics of the separator in each of the lithium batteries of Examples 1 to 4 and Comparative Examples 1 to 7 were evaluated by a breakdown voltage test. The results are shown in Table 2. The BDV test was performed using a TOS5301 (available from KIKISUI) while applying an increasing voltage to 0.3 Kv over 8 seconds at a constant current of 0.3 mA (AC mode) to each separator placed between SUS plates, to thereby measure a voltage at a short point at which increasing the voltage was stopped.

### Evaluation Example 3: Evaluation of air permeability (Gurley value) of separator

The lithium batteries of Examples 1 to 4 and Comparative Examples 1 to 7 after the formation process were disassembled to take the jelly roll from each pouch. The separator was removed from each of the jelly rolls and then used for air permeability evaluation.

The air permeability (Gurley value) was measured as the time (in seconds) it takes for 100 cc of air to pass through each separator, using a measurement equipment (EG01-55-1 MR, available from ASAHI SEIKIO). The results are shown in Table 2.

### Evaluation Example 4: Evaluation of water content of separator

The lithium batteries of Examples 1 to 4 and Comparative Examples 1 to 7 after the formation process were disassembled to take the jelly roll from each pouch. The separator was removed from each of the jelly rolls and then used for water content measurement. The results are shown in Table 2. The water content measurement was performed according to the Karl-Fischer method.

### Evaluation Example 5: Evaluation of bending strength (adhesion) between negative electrode and separator

The lithium batteries of Examples 1 to 4 and Comparative Examples 1 to 7 after the formation process were disassembled to take the jelly roll from each pouch. The adhesion between the separator and the positive active material layer and the negative active material layer was measured as a bending strength according to a 3-point bend flexure test (INSTRON). In particular, each pouched cell after the formation process was pressed down at a rate of 5 mm/min to measure a Max value (N, MPa) from the Zero-point to a 5mm-bending. The results are shown in FIG. 2.

**Table 2**

| Example | Insulation characteristics (BDV, kV) | Increase in air permeability (sec/100cc) | Water content (ppm) | Water content per unit thickness of separator (ppm/ µm) | Bending strength (adhesion, N) |
|---|---|---|---|---|---|
| Example 1 | 1.01 (Δ0.16) | Δ20 | 287 | 33.765 | 350 |
| Example 2 | 0.976 | - | 241 | 28.353 | 270 |
| Example 3 | 1.068 | - | 250 | 29.412 | 456 |
| Example 4 | 1.034 | Δ44 | 330 | 34.737 | 376 |
| Comparative Example 1 | 0.874 | - | - | - | 208 |
| Comparative Example 2 | 0.734 | - | - | - | 58 |
| Comparative Example 3 | 0.831 | - | - | - | 220 |
| Comparative Example 4 | 1.087 | - | - | - | 510 |
| Comparative Example 5 | - | - | - | - | - |
| Comparative Example 6 | 0.910(Δ0.06) | Δ33 | 2429 | 285.76 | 297 |
| Comparative Example 7 | 0.752 | - | - | - | 185 |

Referring to Table 2, the separators according to Examples 1 to 4 prepared using the second organic particles as a filler were each found to have a breakdown voltage (BDV) of about 0.9 kV or greater, while the separator of Comparative Example 1 using the inorganic particles as a filler and the separator of Comparative Example 2 including only inorganic particles were each found to have a low BDV less than 0.9 kV. The separator used in Example 1 had a BDV increase due to the coating layer of about 0.16kV, while the separator according to Comparative Example 6, using the inorganic particles of 0.15 µm as a filler, had a low BDV increase due to the coating layer of 0.06 kV. The separator used in Comparative Example 7, using the inorganic particles of 0.35 µm as a filler, was also found to have a low BDV of about 0.752 kV. These results support that a separator according to one or embodiments using the second organic particles as a filer may have improved insulation characteristics, as compared with when inorganic particles are used as a filler.

The separator used in Example 1, using the second organic particles as a filler, had an increase in air permeability of less than Δ30, while the separator used in Comparative Example 6, using the inorganic particles of 0.15 µm as a filler, had a high increase in air permeability of Δ30 or greater. The separator used in Example 4, having a large coating layer thickness of about 1.0 µm on each substrate surface, had a slightly high increase in air permeability of Δ44.

The separators used in Examples 1 to 4, using the second organic particles as a filler, were each found to have a water content of 400 ppm or less, while the separator used in Comparative Example 6 had a high water content of 2429 ppm.

The lithium batteries of Examples 1 to 4, using the second organic particles as a filler, were each found to have a bending strength of about 250 N to about 500 N, while the lithium battery of Comparative Example 1, using the inorganic particles as a filler, and the lithium battery of Comparative Example 2, including only the inorganic particles, were found to have a low bending strength of about 208 N and about 58 N, respectively. The lithium battery of Comparative Example 3, using the separator including 3% (by area ratio) of the first organic particles with respect to a total surface area of the coating layer, was found to have a low bending strength of about 220 N, while the lithium battery of Comparative Example 4, using the separator including 35 % (by area ratio) of the first organic particles with respect to the total surface area of the coating layer, was found to have an excessively high bending strength of 510 N.

In conclusion, the separators according to the one or more embodiments and the lithium batteries each using the separator according to any of the embodiments were found to have improved characteristics in terms of insulation characteristics, water content, and adhesion, as compared with separators and lithium batteries according to the related art.

### Evaluation Example 6: Charge-discharge cycle characteristic evaluation

The lithium batteries of Examples 1 to 3 and Comparative Example 4 were subjected to charge-discharge cycles, wherein at the 1^{st}, 50^{th}, 100^{th}, 150^{th}, 200^{th}, 250^{th}, 300^{th}, 350^{th}, 400^{th}, and 450^{th} cycles, each lithium battery (4.4V) was charged at 0.2C with a 0.02 C cutoff and then discharged at 0.2C with a 2.75 V cutoff (25 °C, 1atm), and at the other cycles each lithium battery was charged at 1C with a 0.1C cutoff and then discharged at 1C with a 3V cutoff. The results are shown in FIG. 6.

Referring to FIG. 6, the lithium batteries of Examples 1, 2, and 3, including 15 %, 7 %, and 28% of the first organic particles, respectively, with respect to the total surface area of the coating layer, were found to have improved charge and discharge characteristics, as compared with the lithium battery of Comparative Example 4 including 35 % of the first organic particles with respect to the total surface area of the coating layer.

As described above, according to the one or more embodiments, using a separator including a coating layer having a novel structure, a lithium battery may have improved adhesion to electrodes, and improved insulation characteristics, air permeability and lifetime characteristics.

It should be understood that embodiments described herein should be considered in a descriptive sense only and not for purposes of limitation. Descriptions of features or aspects within each embodiment should typically be considered as available for other similar features or aspects in other embodiments.

## Claims

1. A separator for a lithium secondary battery, the separator comprising a substrate and a coating layer on at least one surface of the substrate, wherein the coating layer comprises first organic particles having an average particle diameter D50 of 0.4 µm to 0.7 µm and second organic particles having an average particle diameter D50 of 0.15 µm to 0.35 µm measured by a dynamic light scattering method, the first organic particles are distributed on the surface of the coating layer in an area ratio from 5% or greater to less 30% with respect to a total surface area of the coating layer measured by SEM,
wherein the first organic particles comprise or consist of at least one selected from the group consisting of polystyrene, polyvinylidene fluoride, polymethyl methacrylate, polyacrylonitrile, polyvinylidone, polyvinyl acetate, polyethylene oxide, cellulose acetate, and azodicarbonamide;
the second organic particles comprise or consist of at least one of cross-linked polystyrene and cross-linked polymethylmethacrylate; and
wherein a weight ratio of the first organic particles to the second organic particles in the coating layer is from 50:50 to 10:90.

2. The separator of claim 1, wherein the first organic particles or the second organic particles have a core-shell structure.

3. The separator of any one of the preceding claims, wherein the coating layer further comprises inorganic particles of at least one of boehmite, alumina (Al₂O₃), BaSO₄, MgO, Mg(OH)₂, clay, silica (SiO₂), SnO₂, CeO₂, NiO, CaO, ZnO, ZrO₂, Y₂O₃, SrTiO₃, BaTiO₃, and MgF₂ and TiO₂.

4. The separator of any one of the preceding claims, wherein the coating layer has a thickness of 0.3 µm to 3.0 µm.

5. The separator of any one of the preceding claims, wherein the coating layer further comprises cellulose nanofibers.

6. The separator of any one of the preceding claims, wherein the coating layer further comprises an organic binder.

7. A method of preparing the separator according to any one of the preceding claims, the method comprising:
(a) preparing a slurry comprising the first organic particles and the second organic particles, wherein first organic particles have an average particle diameter D50 of 0.4 µm to 0.7 µm and second organic particles have an average particle diameter D50 of 0.15 µm to 0.35 µm measured by a dynamic light scattering method,
wherein the first organic particles comprise or consist of at least one selected from the group consisting of polystyrene, polyvinylidene fluoride, polymethyl methacrylate, polyacrylonitrile, polyvinylidone, polyvinyl acetate, polyethylene oxide, cellulose acetate, and azodicarbonamide;
the second organic particles comprise or consist of at least one of cross-linked polystyrene and cross-linked polymethylmethacrylate; and
wherein a weight ratio of the first organic particles to the second organic particles in the coating layer is from 50:50 to 10:90; and
(b) coating the slurry on the at least one surface of the substrate and drying a coated resultant.

8. A lithium battery comprising:
a positive electrode;
a negative electrode; and
a separator according to any one of claims 1 to 6 interposed between the positive electrode and the negative electrode.

## Patentansprüche

1. Separator für eine Lithium-Sekundärbatterie, wobei der Separator ein Substrat und eine Beschichtungsschicht auf mindestens einer Oberfläche des Substrats umfasst, wobei die Beschichtungsschicht erste organische Teilchen mit einem durchschnittlichen Teilchendurchmesser D50 von 0,4 µm bis 0,7 µm und zweite organische Teilchen mit einem durchschnittlichen Teilchendurchmesser D50 von 0,15 µm bis 0,35 µm aufweist, gemessen durch ein dynamisches Lichtstreuverfahren, wobei die ersten organischen Teilchen auf der Oberfläche der Beschichtungsschicht in einem Flächenverhältnis von 5 % oder mehr bis weniger als 30 % in Bezug auf eine Gesamtoberfläche der Beschichtungsschicht, gemessen durch SEM, verteilt sind,
wobei die ersten organischen Teilchen umfassen oder bestehen aus mindestens einer ausgewählt aus der Gruppe bestehend aus Polystyrol, Polyvinylidenfluorid, Polymethylmethacrylat, Polyacrylnitril, Polyvinylidon, Polyvinylacetat, Polyethylenoxid, Celluloseacetat und Azodicarbonamid;
die zweiten organischen Teilchen umfassen oder bestehen aus mindestens einem von vernetztem Polystyrol und vernetztem Polymethylmethacrylat; und
wobei das Gewichtsverhältnis der ersten organischen Teilchen zu den zweiten organischen Teilchen in der Beschichtungsschicht 50:50 bis 10:90 beträgt.

2. Separator nach Anspruch 1, wobei die ersten organischen Teilchen oder die zweiten organischen Teilchen eine Kern-Schale-Struktur aufweisen.

3. Separator nach einem der vorhergehenden Ansprüche, wobei die Beschichtungsschicht ferner anorganische Teilchen aus mindestens einem der folgenden Stoffe umfasst: Böhmit, Aluminiumoxid (Al₂O₃), BaSO₄, MgO, Mg(OH)₂, Ton, Kieselerde (SiO₂), SnO₂, CeO₂, NiO, CaO, ZnO, ZrO₂, Y₂O₃, SrTiO₃, BaTiO₃, und MgF₂ und TiO₂.

4. Separator nach einem der vorhergehenden Ansprüche, wobei die Beschichtungsschicht eine Dicke von 0,3 bis 3,0 µm aufweist.

5. Separator nach einem der vorhergehenden Ansprüche, wobei die Beschichtungsschicht ferner Cellulose-Nanofasern umfasst.

6. Separator nach einem der vorhergehenden Ansprüche, wobei die Beschichtungsschicht ferner ein organisches Bindemittel umfasst.

7. Verfahren zur Herstellung des Separators nach einem der vorhergehenden Ansprüche, das Verfahren umfassend:
(a) Herstellen einer Aufschlämmung, umfassend die ersten organischen Teilchen und die zweiten organischen Teilchen, wobei die ersten organischen Teilchen einen durchschnittlichen Teilchendurchmesser D50 von 0,4 µm bis 0,7 µm aufweisen und die zweiten organischen Teilchen einen durchschnittlichen Teilchendurchmesser D50 von 0,15 µm bis 0,35 µm aufweisen, gemessen durch ein dynamisches Lichtstreuverfahren,
wobei die ersten organischen Teilchen umfassen oder bestehen aus mindestens einer ausgewählt aus der Gruppe bestehend aus Polystyrol, Polyvinylidenfluorid, Polymethylmethacrylat, Polyacrylnitril, Polyvinylidon, Polyvinylacetat, Polyethylenoxid, Celluloseacetat und Azodicarbonamid;
die zweiten organischen Teilchen umfassen oder bestehen aus mindestens einem von vernetztem Polystyrol und vernetztem Polymethylmethacrylat; und
wobei das Gewichtsverhältnis der ersten organischen Teilchen zu den zweiten organischen Teilchen in der Beschichtungsschicht 50:50 bis 10:90 beträgt; und
(b) Auftragen der Aufschlämmung auf die mindestens eine Oberfläche des Substrats und Trocknen eines beschichteten Ergebnisses.

8. Lithium-Batterie, umfassend:
eine positive Elektrode;
eine negative Elektrode; und
einen Separator nach einem der Ansprüche 1 bis 6, der zwischen der positiven Elektrode und der negativen Elektrode angeordnet ist.

## Revendications

1. Séparateur pour une batterie rechargeable au lithium, le séparateur comprenant un substrat et une couche de revêtement sur au moins une surface du substrat, dans lequel la couche de revêtement comprend des premières particules organiques ayant une granulométrie moyenne D50 de 0,4 µm à 0,7 µm et des deuxièmes particules organiques ayant une granulométrie moyenne D50 de 0,15 µm à 0,35 µm, mesurée par un procédé de diffusion dynamique de la lumière, les premières particules organiques sont distribuées sur la surface de la couche de revêtement selon une proportion en surface supérieure ou égale à 5 % et inférieure ou égale à 30 % par rapport à la superficie totale de la couche de revêtement mesurée par MEB,
dans lequel les premières particules organiques comprennent ou consistent en au moins l'un choisi dans le groupe constitué par le polystyrène, le poly(fluorure de vinylidène), le poly(méthacrylate de méthyle), le polyacrylonitrile, la polyvinylidone, le poly(acétate de vinyle), le poly(oxyde d'éthylène), l'acétate de cellulose, et l'azodicarbonamide ;
les deuxièmes particules organiques comprennent ou consistent en au moins l'un parmi le polystyrène réticulé et le poly(méthacrylate de méthyle) réticulé ; et
dans lequel le rapport en poids des premières particules organiques aux deuxièmes particules organiques dans la couche de revêtement est de 50:50 à 10:90.

2. Séparateur selon la revendication 1, dans lequel les premières particules organiques ou les deuxièmes particules organiques ont une structure cœur-gaine.

3. Séparateur selon l'une quelconque des revendications précédentes, dans lequel la couche de revêtement comprend en outre des particules inorganiques en au moins l'un parmi la boehmite, l'alumine (Al₂O₃), BaSO₄, MgO, Mg(OH)₂, l'argile, la silice (SiO₂), SnO₂, CeO₂, NiO, CaO, ZnO, ZrO₂, Y₂O₃, SrTiO₃, BaTiO₃, et MgF₂ et TiO₂.

4. Séparateur selon l'une quelconque des revendications précédentes, dans lequel la couche de revêtement a une épaisseur de 0,3 µm à 3,0 µm.

5. Séparateur selon l'une quelconque des revendications précédentes, dans lequel la couche de revêtement comprend en outre des nanofibres de cellulose.

6. Séparateur selon l'une quelconque des revendications précédentes, dans lequel la couche de revêtement comprend en outre un liant organique.

7. Procédé de préparation du séparateur selon l'une quelconque des revendications précédentes, le procédé comprenant les étapes consistant en :
(a) la préparation d'une bouillie comprenant les premières particules organiques et les deuxièmes particules organiques, où les premières particules organiques ont une granulométrie moyenne D50 de 0,4 µm à 0,7 µm et les deuxièmes particules organiques ont une granulométrie moyenne D50 de 0,15 µm à 0,35 µm, mesurée par un procédé de diffusion dynamique de la lumière,
où les premières particules organiques comprennent ou consistent en au moins l'un choisi dans le groupe constitué par le polystyrène, le poly(fluorure de vinylidène), le poly(méthacrylate de méthyle), le polyacrylonitrile, la polyvinylidone, le poly(acétate de vinyle), le poly(oxyde d'éthylène), l'acétate de cellulose, et l'azodicarbonamide ;
les deuxièmes particules organiques comprennent ou consistent en au moins l'un parmi le polystyrène réticulé et le poly(méthacrylate de méthyle) réticulé ; et
où le rapport en poids des premières particules organiques aux deuxièmes particules organiques dans la couche de revêtement est de 50:50 à 10:90 ; et
(b) le dépôt de la bouillie sous forme de revêtement sur l'au moins une surface du substrat, et le séchage du produit résultant revêtu.

8. Batterie au lithium comprenant :
une électrode positive ;
une électrode négative ; et
un séparateur selon l'une quelconque des revendications 1 à 6 interposé entre l'électrode positive et l'électrode négative.
